# EUROPÄISCHE PATENTANMELDUNG

(11) **EP 1 693 274 A1**
(43) Veröffentlichungstag der Anmeldung: **23.08.2006**
(21) Anmeldenummer: 05026555.2
(22) Anmeldetag: 06.12.2005
(51) Int. Cl.: B62B 3/00, B62B 3/02, A01G 9/14

(54) **Bewässerungs- und Transportvorrichtung für Pflanzen, Gestellstrebe dafür sowie Verfahren zur platzsparenden Anordnung**

(30) Priorität: 28.01.2005 DE 102005004749
(71) Anmelder: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Segel (DE); Trinczek, Reinhold, 21514 Büchen (DE)
(74) Vertreter: Philipp, Matthias

(57) **Zusammenfassung**

Bewässerungs- und Transportvorrichtung für Pflanzen, mit einer rechteckigen Sockelplattform (2), an deren vier Eckbereichen senkrecht dazu jeweils eine Aufnahmehülse (16) angeordnet ist, in der jeweils eine im Querschnitt C- oder U-förmige, mit einem im wesentlichen durchgehenden Längsschlitz (26) und mit einer Reihe von dem Längsschlitz (26) benachbarten und/oder gegenüberliegenden Einhängeausnehmungen (28) versehene Gestellstrebe (20) in einer vertikalen Position aufgenommen ist, wobei an jeder Gestellstrebe (20) mindestens ein den Längsschlitz (26) überbrückender Steg (70) angeordnet ist.

## Beschreibung

Die Erfindung betrifft eine Bewässerungs- und Transportvorrichtung für Pflanzen nach dem Oberbegriff des Anspruchs 1, eine Gestellstrebe nach dem Oberbegriff des Anspruches 16 und ein Verfahren zum zeit- und platzsparenden Anordnen einer derartigen Bewässerungs-und Transportvorrichtung nach dem Oberbegriff des Anspruches 20.

Bewässerungs- und Transportvorrichtungen für Pflanzen, wie sie bspw. zur Auslieferung und Lagerung von Topf- und Gartenpflanzen in Gartenmärkten und ähnlichen Verkaufsstellen verwendet werden, sind bspw. aus der DE 202 13 719 bekannt. Beim (Rück-)transport von derartigen Vorrichtungen im leeren Zustand stellt sich regelmäßig das Problem, die zahlreichen Lagerungsplattformen, auf denen im Lieferzustand die Pflanzen gestanden hatten, nunmehr in möglichst kompakter, platzsparender Anordnung auf der Sockelplattform bzw. an den Gestellstreben unterzubringen, damit der zur Verfügung stehende Laderaum der hierfür verwendeten Lieferfahrzeuge möglichst gut ausgenutzt wird, und diesen Vorgang in möglichst kurzer Zeit durchzuführen.

Herkömmlicherweise wird hierbei so vorgegangen, daß die einzelnen Lagerungsplattformen in einer dichtestmöglichen Anordnung übereinander in die Gestellstreben eingehängt werden, d.h. so, daß in die Einhängeausnehmungen jeder einzelnen Ebene eine Lagerungsplattform eingehängt wird. Dies ist sehr zeitaufwendig und nutzt den an sich in vertikaler Richtung vorhandenen Platz nicht optimal aus.

Aus DE 28 00 575 C2 ist es an sich bekannt, die Gestellstreben in einer Transportstellung, in der deren Längsschlitze zueinander bzw. nach innen weisen, in die Aufnahmehülsen zu stecken, d.h. in einer um 180° gegenüber der Lagerungsstellung verdrehten Stellung. In dieser Stellung können mehrere Lagerungsplattformen eine nach der anderen von oben auf die Sockelplattform gestapelt werden, wobei die Eingriffs-Endabschnitte nicht mehr in die Einhängeausnehmungen eingehängt werden müssen, sondern in/durch die Längsschlitze ragen und in einem hohlen Innenraum der Gestellstreben aufgenommen sind. Dies führt zu einer Einsparung von Arbeitszeit sowohl bei der Herstellung der Transportposition (Lagerungsplattformen sind auf der Sockelplattform gestapelt) als auch bei dem umgekehrten Vorgang, bei dem die einzelnen Lagerungsplattformen entnommen werden müssen und erneut in an einer Sockelplattform gehaltene Gestellstreben einzuhängen sind, die selbstverständlich zuvor verdreht eingesetzt worden sind bzw. sich in der Lagerungsstellung befinden. Dabei ergibt sich jedoch eine mangelhafte Stabilität der Gesamtvorrichtung, da die Lagerungsplattformen nur unzulänglich an den Gestellstreben gehalten sind.

Der Erfindung liegt die Aufgabe zugrunde, hier eine Verbesserung zu schaffen und eine Bewässerungs- und Transportvorrichtung für Pflanzen anzugeben, bei der die Lagerungsplattformen schnell, platzsparend und gleichzeitig stabil in einem Transportzustand angeordnet werden können, und ein Verfahren aufzuzeigen, mit dem eine Bewässerungs- und Transportvorrichtung für Pflanzen schnell, platzsparend und stabil von einem Lagerungs- in einen Transportzustand und umgekehrt gebracht werden kann.

Diese Aufgabe wird in vorrichtungsmäßiger Hinsicht durch eine Bewässerungs- und Transportvorrichtung nach Anspruch 1 gelöst.

Vorzugsweise ist vorgesehen, daß mindestens ein Steg im Bereich eines Endabschnitts einer Gestellstrebe angeordnet ist. Es ist günstig, wenn je mindestens ein Steg im Bereich jeweils eines Endabschnitts einer Gestellstrebe angeordnet ist.

Bevorzugt ist vorgesehen, daß mindestens ein Steg in einem mittleren Bereich einer Gestellstrebe angeordnet ist.

Die Erfindung sieht weiter vor, daß die Gestellstreben in einer Transportstellung angeordnet sind, in der die Längsschlitze von zwei einer ersten Seite der Sockelplattform zugeordneten Gestellstreben zueinander und deren Einhängeausnehmungen voneinander weg weisen und die Längsschlitze von zwei einer der ersten Seite gegenüberliegenden zweiten Seite zugeordneten Gestellstreben zueinander und deren Einhängeausnehmungen voneinander weg weisen, und in einer Lagerungsstellung in den Aufnahmehülsen aufnehmbar sind, in der die Einhängeausnehmung der der ersten Seite zugeordneten Gestellstreben zueinander und deren Längsschlitze voneinander weg weisen und die Einhängeausnehmungen der der zweiten Seite zugeordneten Gestellstreben zueinander und deren Längsschlitze voneinander weg weisen, wobei auf der Sockelplattform eine Anzahl von Lagerungsplattformen übereinander gestapelt sind, von denen jede rechteckig ist und in Eckbereichen jeweils ein Halterungselement aufweist, das einen frei endenden Einhänge-Endabschnitt aufweist, wobei die Einhänge-Endabschnitte jeweils einer Lagerungsplattform in der Lagerungsstellung der Gestellstreben in vier auf gleicher Höhe befindliche Einhängeausnehmungen einsetzbar sind und in der Transportstellung der Gestellstreben in die Längsschlitze ragen, wobei eine Lagerungsplattform auf vier Stege der Gestellstreben aufgelegt ist.

Für die Erfindung spielt es ersichtlich keine Rolle, ob die Gestellstreben in der Lagerungsstellung so angeordnet sind, daß die Einhängeausnehmungen in Längsrichtung oder in Richtung der Schmalseiten der Sockelplattform zueinander gerichtet sind. In jedem Fall läßt sich durch ein um 180° verdrehtes Einsetzen die erfindungsgemäße vorteilhafte Transportstellung erzielen.

Zweckmäßigerweise ist vorgesehen, daß die Aufnahmehülsen einen quadratischen Aufnahmequerschnitt aufweisen.

Ferner sieht die Erfindung vor, daß jede Aufnahmehülse an ihrem unteren Ende durch ein im Querschnitt ihrem Aufnahmequerschnitt entsprechendes und über das jeweilige untere Ende vorstehendes Verschlußteil abgeschlossen ist, so daß mehrere Sockelplattformen zentriert stapelbar sind.

Außerdem ist bevorzugt vorgesehen, daß die Gestellstreben im Querschnitt im wesentlichen quadratisch ausgebildet sind. Im Falle einer C-Form kann der Längsschlitz bspw. eine Breite haben, die 20% bis 90% der Seitenlänge der Quadratform beträgt, z.B. 50%.

Eine zweckmäßige Ausführungsform zeichnet sich dadurch aus, daß die Sockelplattform unterseitig mit Rollen versehen ist, bspw. mit vier feststehenden Rollen oder mit zwei feststehenden und zwei Lenkrollen.

Vorteilhafterweise ist vorgesehen, daß die Einhängeausnehmungen der Gestellstreben abwechselnd eine erste und eine zweite Form oder Kontur aufweisen, so daß ein horizontales Einhängen einer Lagerungsplattform erleichtert ist.

Es kann vorgesehen sein, daß die jeweils einer Schmalseite der Sockelplattform zugeordneten Gestellstreben an ihren oberen freien Enden paarweise mit je einem U-förmigen Steckbügel verbunden sind.

Die Sockelplattform kann einen Boden und einen wannenartig umlaufenden Rand aufweisen.

Es ist von besonderem Vorteil, wenn ein oberer Randbereich jeder Aufnahmehülse, der sich unterhalb eines benachbarten Eingriffs-Endabschnitts einer untersten, in Transportstellung aufgestapelten Lagerungsplattform befindet, in einer solchen Höhe über der Sockelplattform, beispielsweise über einer Oberkante des Randes der Sockelplattform, angeordnet ist, daß ein vertikaler Freiraum oder Abstand zwischen dem Randbereich und dem Eingriffs-Endabschnitt der untersten Lagerungsplattform besteht, so daß die Eingriffs-Endabschnitte nicht tragend auf den Aufnahmehülsen aufliegen. Bei einer größeren Anzahl übereinander gestapelter Lagerungsplattformen kann es dann nicht zu einer Überlastung und Verformung der Eingriffs-Endabschnitte der untersten Lagerungsplattformen kommen.

Hierbei kann vorgesehen sein, daß die Aufnahmehülsen jeweils an einander in Richtung einer Schmalseite oder einer Längsseite zugekehrten Seiten einen Ausschnitt aufweisen, der in der Transportstellung der Gestellstreben im wesentlichen deckungsgleich mit deren Längsschlitz verläuft und in den je ein Eingriffs-Endabschnitt der untersten Lagerungsplattform ragen kann.

Die Sockelplattform kann an ihren Schmalseiten jeweils mit einer Erweiterung versehen sein, die in Längsrichtung zwischen Eckbereichen einer rechteckigen Grundform der Sockelplattform vorsteht. Die Erweiterung kann kreissektor-, trapez- oder rechteckförmig sein.

Außerdem kann innerhalb einer oder beider Erweiterung(en) (jeweils) ein Überlauf angeordnet sein. Der Überlauf kann höheneinstellbar sein, um ein bestimmtes Flüssigkeitsniveau innerhalb der Sockelplattform vorzugeben.

Die mindestens eine Lagerungsplattform kann einen Boden und einen umlaufenden Rand aufweisen, wobei ihr Grundriß bevorzugt im wesentlichen mit dem der Sockelplattform übereinstimmt.

Die Sockelplattform kann mit Zentrierungen für eine darauf zu stapelnde Lagerungsplattform versehen sein. Die Zentrierungen können insbesondere an den Erweiterungen angeordnet sein, und sie können durch an dem Rand innen oder außen fixierte und nach oben darüber vorstehende Stifte oder plattenförmige Elemente gebildet sein.

Bevorzugt ist vorgesehen, daß mindestens eine Lagerungsplattform in der Transportstellung gegenüber dem Gebrauchszustand umgekehrt, d.h. mit ihrer Oberseite nach unten weisend, auf die Sockelplattform aufgestapelt ist.

Hierin ist ein wesentlicher Vorteil zu sehen, da sich dann in den Lagerungsplattformen kein Regenwasser sammeln kann. Da die Bewässerungs- und Transportvorrichtungen in der Regel im Freien gelagert werden, kann sich bei längerer Lagerzeit durch das Überlaufsystem in jeder Lagerungsplattform Wasser ansammeln. Dies ist sehr unangenehm, wenn die Lagerungsplattformen erneut benötigt werden. Andererseits ist die Lagerung in einem überdachten Bereich sehr kostenintensiv.

Die Erfindung sieht weiterhin vor, daß die mindestens eine Lagerungsplattform unterseitig mit einer Zentrierung für eine in der Transportstellung darüber gestapelte Lagerungsplattform versehen ist, d.h. wenn beide oder alle Lagerungsplattformen umgedreht gestapelt sind. Die Zentrierung kann durch zwischen Schmalseiten verlaufende, unterseitig an dem Boden befestigte, im Querschnitt U- oder V-förmige Verstärkungen gebildet sein, die jeweils in Übergangsbereichen zwischen Eckbereichen und Erweiterung der Lagerungsplattform enden können. Alternativ können derartige Verstärkungen in Querrichtung, also zwischen Längsseiten, vorgesehen sein.

Weiterhin kann vorgesehen sein, daß die Lagerungsplattformen an ihren Einhänge-Endabschnitten mit zwei gegenüberliegenden Ausformungen versehen sind, mit denen sie, wahlweise in einer Gebrauchsstellung oder in einer umgedrehten Abdeckstellung, auf Stege aufleg- und einhängbar sind, die den jeweiligen Längsschlitz der Gestellstreben stellenweise überbrücken. Hierbei ist bevorzugt vorgesehen, daß je Gestellstrebe ein oder zwei benachbarte Stege im Bereich der Endabschnitte der Gestellstrebe angeordnet sind.

Die Aufgabe der Erfindung wird ferner gelöst durch eine Gestellstrebe nach Anspruch 16. Es kann vorgesehen sein, daß mindestens ein Steg im Bereich eines Endabschnitts einer Gestellstrebe angeordnet ist. Es ist günstig, wenn je mindestens ein Steg im Bereich jeweils eines Endabschnitts einer Gestellstrebe angeordnet ist. Ferner ist es vorteilhaft, wenn mindestens ein Steg in einem mittleren Bereich einer Gestellstrebe angeordnet ist.

In verfahrensmäßiger Hinsicht wird die Aufgabe der Erfindung gelöst durch ein Verfahren nach Anspruch 20.

Hierbei ist es vorteilhaft, wenn eine Lagerungsplattform in oberster Position auf Stege aufgesetzt wird.

Bevorzugt ist bei dem Verfahren vorgesehen, daß die oberste Lagerungsplattform in umgekehrter Lage (Abdeckstellung) aufgesetzt wird, d.h. so, daß ihr Boden nach unten und ihre Unterseite nach oben weist, so daß sich kein Regenwasser in den Wannen ansammeln kann (Abdeckstellung statt Gebrauchsstellung der Lagerungsplattformen).

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine Bewässerungs- und Transportvorrichtung mit einer Sockel- und zwei Lagerungsplattformen in einer Lagerungsstellung zeigt,
Fig. 2 eine Lagerungsplattform der Vorrichtung nach Fig. 1 zeigt,
Fig. 3 eine Sockelplattform der Vorrichtung nach Fig. 1 zeigt,
Fig. 4 eine erfindungsgemäße Vorrichtung mit Sockelplattform und Gestellstreben zeigt,
Fig. 5 eine perspektivische Teilansicht einer Vorrichtung nach Fig. 4 mit mehreren aufgestapelten Lagerungsplattformen zeigt,
Fig. 6 eine vergrößerte Ansicht eines Eckbereichs der Vorrichtung nach Fig. 5 zeigt,
Fig. 7 eine perspektivische Teilansicht einer erfindungsgemäßen Vorrichtung mit einer größeren Anzahl von Lagerungsplattformen als Fig. 5 und 6 zeigt,
Fig. 8 einen oberen Bereich der Vorrichtung nach Fig. 7 zeigt,
Fig. 9 einen Eckbereich ähnlich Fig. 6 in vergrößertem Maßstab zeigt,
Fig. 10 einen Eckbereich der Sockelplattform der erfindungsgemäßen Vorrichtung zeigt, ohne darin aufgenommene Gestellstrebe,
Fig. 11 eine vergrößerte Teilansicht gemäß Fig. 10 zeigt,
Fig. 12 eine Ansicht eines Eckbereichs der Vorrichtung gemäß Fig. 4 zeigt,
Fig. 13 eine vergrößerte Ansicht gemäß Fig. 12 zeigt, und
Fig. 14 einen Eckbereich gemäß Fig. 11 mit einer Zentrierung zeigt,
Fig. 15 eine alternative Ausführungsform eines Einhänge-Endabschnitts einer Lagerungsplattform zeigt,
Fig. 16 eine alternative Gestellstrebe zeigt,
Fig. 17 die Gestellstrebe nach Fig. 16 im Einsatz zeigt, und
Fig. 18 eine Variante eines Zentrierelements zeigt.

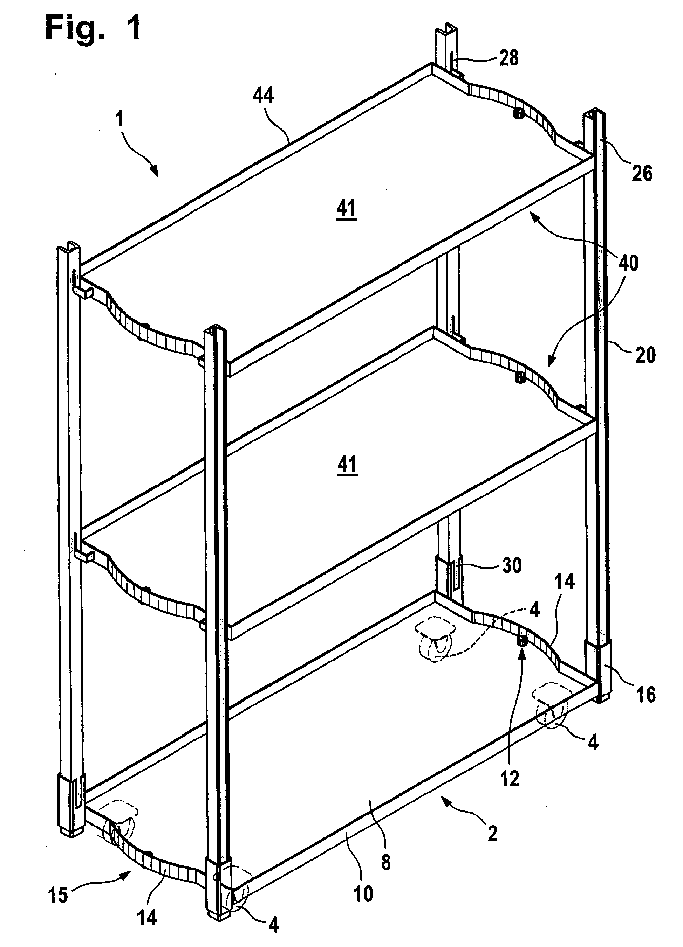

Zunächst sei auf Fig. 1 bis 3 Bezug genommen, in denen eine Ausführungsform der Erfindung dargestellt ist. Die Vorrichtung 1 weist zunächst eine rechteckige Sockelplattform 2 auf, die entweder zur unmittelbaren Auflage auf einem Untergrund oder aber, wie dargestellt, zum Verfahren mit Rollen versehen sein kann, von denen eine in Fig. 1 erkennbar und mit 4 bezeichnet ist. Bspw. können an einer Schmalseite der Sockelplattform zwei feststehende Rollen und an der gegenüberliegenden Schmalseite zwei Schwenkrollen angeordnet sein, um ein leichtes und flexibles Verfahren zu ermöglichen.

Die Sockelplattform 2 weist einen im wesentlichen ebenen Boden 8 sowie einen diesen wangenartig umschließenden Rand 10 auf, so daß eine Aufnahmefläche für Pflanzenbehälter gebildet ist, auf der Wasser oder eine Nährlösung in einer gewissen Höhe stehen kann. Zur Regulierung des Flüssigkeitsstands ist in einer entsprechenden Öffnung im Boden 8 ein einstellbarer Überlauf 12 angeordnet, oder an gegenüberliegenden Schmalseiten des Bodens 8 jeweils ein Überlauf, so daß gelagerte Pflanzen optimal mit Wasser versorgt werden.

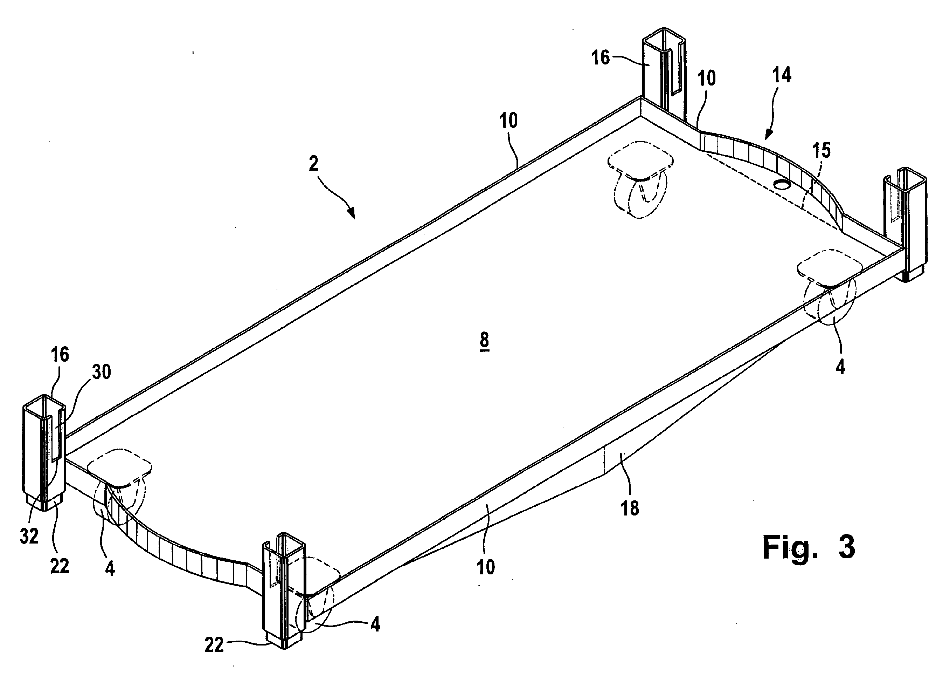

Wie insbesondere Fig. 3 weiter zeigt, ist der Boden 8 bzw. die Sockelplattform 2 nicht genau rechteckförmig ausgebildet, sondern weist an den Schmalseiten jeweils eine bogenförmige Erweiterung 14 auf, innerhalb der der Überlauf 12 angeordnet ist, so daß die eigentliche Rechteckfläche des Bodens 8 für Pflanzgefäße zur Verfügung steht, ohne durch einen Überlauf 12 eingeschränkt zu werden. Da die Erweiterung 14 im wesentlichen der genannten Aufnahme des Überlaufs 12 dient, könnte sie auch eine beliebige andere Formgebung aufweisen, bspw. trapezförmig (wie in der Zeichnung an anderer Stelle dargestellt ist), rechteckförmig oder in sonstiger Form, sofern sichergestellt ist, daß die Rechteckfläche des Bodens, die durch die äußeren Ecken festgelegt ist, ohne Einschränkung durch einen Überlauf 12 zur Verfügung steht, d.h. Überlauf und Erweiterung befinden sich außerhalb der in Fig. 3 gestrichelt angedeuteten Schmalseite 15 der Sockelplattform 2.

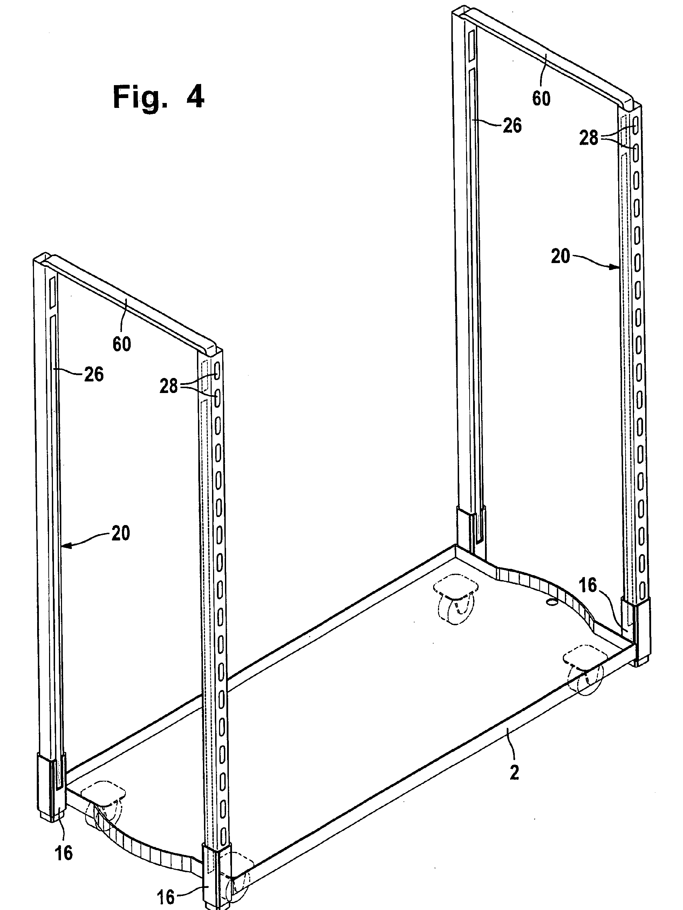

Wie Fig. 1 und insb. Fig. 3 und 4 zeigen, ist an jeder Ecke der Sockelplattform 2 eine Aufnahmehülse 16 vertikal bzw. senkrecht zu dem Boden 8 angeordnet, die zunächst der Aufnahme jeweils einer Gestellstrebe 20 dient. Ein innerer freier Querschnitt der Aufnahmehülsen 16 ist in diesem Beispiel quadratisch, ebenso wie die äußere Querschnittskontur der Gestellstreben 20, wobei die inneren Querschnittsabmessungen der Aufnahmehülsen 16 geringfügig größer sind als die äußeren Querschnittsabmessungen der Gestellstreben 20, so daß eine leichte Steckbarkeit und spielarme Halterung gewährleistet ist.

In einen unteren Bereich einer jeden Aufnahmehülse 16 ist ein Verschlußteil 22 eingesetzt und darin fixiert, bspw. durch Schweißen. Die Aufgabe der Verschlußteile 22 besteht einerseits darin, einen Höhenanschlag für die von oben eingesteckten Gestellstreben 20 zu bilden, so daß sich diese in einer festen Höhe befinden, und andererseits darin, eine Zentrierung zu bilden, um mehrere Sockelplattformen 2, ohne eingesteckte Gestellstreben 20, übereinanderstapeln zu können, wobei dann jeweils ein aus einer Aufnahmehülse 16 überstehender Bereich eines Verschlußteils 22 von oben in eine Aufnahmehülse 16 einer unterhalb angeordneten Sockelplattform 2 eingreift. Die Verschlußteile 22 könnten daher rohrartig offen oder aber über den Querschnitt geschlossen sein.

Die Sockelplattform 2 weist an ihren Längsseiten unten je eine leicht V-förmige Versteifung 18 auf, die einerseitige der Erhöhung der statischen Festigkeit dient und anderseits dazu beiträgt, dass die Sockelplattform bzw. eine beladene, vollständige Bewässerungsvorrichtung (Fig. 1) mit einem Gabelstapler nur so angehoben wird, dass dessen Zinken seitlich außerhalb der Verstärkung angreifen. Die Versteifung könnte alternativ aus einem Rohrstück bestehen.

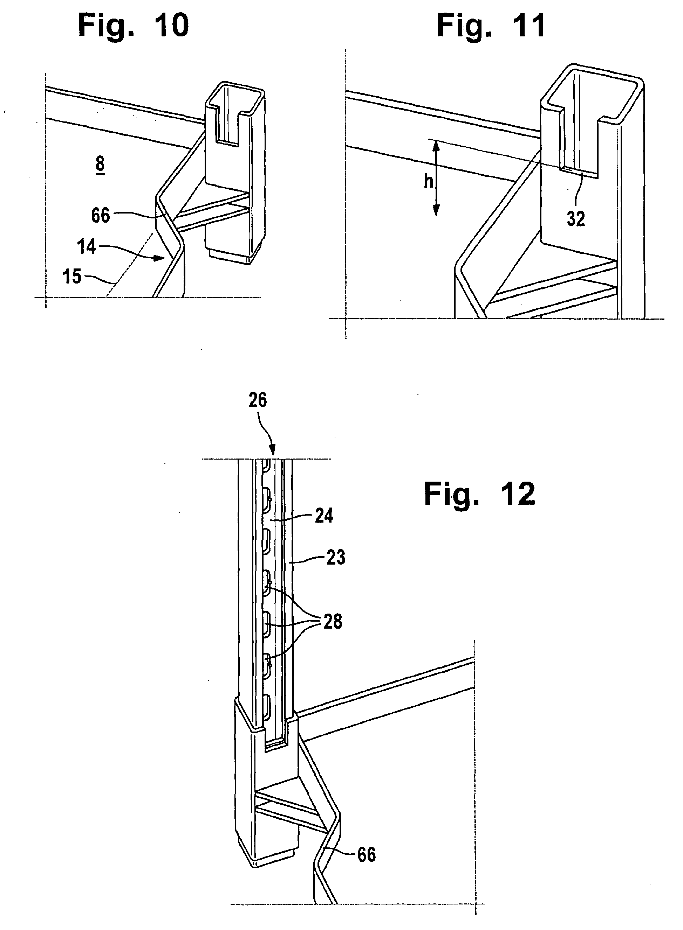

Die Gestellstreben 20 sind in dem Ausführungsbeispiel nach Fig. 4 bis 14 im Querschnitt quadratisch und weisen, mittig in einer Seitenwand 23 (Fig. 12), einen längsverlaufenden, durchgehenden Längsschlitz 26 auf, während in einer dem Längsschlitz 26 gegenüberliegenden Seitenwand 24 der Gestellstrebe eine Anzahl von regelmäßig beabstandeten Einhängeausnehmungen 28 ausgebildet ist. Die Einhängeausnehmungen 28 sind abwechselnd etwas unterschiedlich ausgebildet, im vorliegenden Beispiel dadurch, daß jede zweite Einhängeaufnehmung glatt oval ist, während die dazwischenliegenden Einhängeaufnehmungen oval mit kleinen seitlichen Ausbuchtungen ausgebildet sind. Diese Anordnung hat den Zweck, das Einhängen der nachfolgend noch beschriebenen Lagerungsplattformen in horizontaler Ausrichtung zu erleichtern.

Wie Fig. 3 und 4 und insb. Fig. 11 bis 13 weiter zeigen, sind die Aufnahmehülsen 16 jeweils an ihrer in Richtung der jeweiligen Schmalseite bzw. zu der Erweiterung 14 weisenden Seite mit einem Ausschnitt 30 versehen, dessen unterer Rand 32 in einer bestimmten Höhe oberhalb des Bodens 8 bzw. der Oberkante des Rands 10 liegt, deren Bedeutung nachfolgend noch erläutert wird.

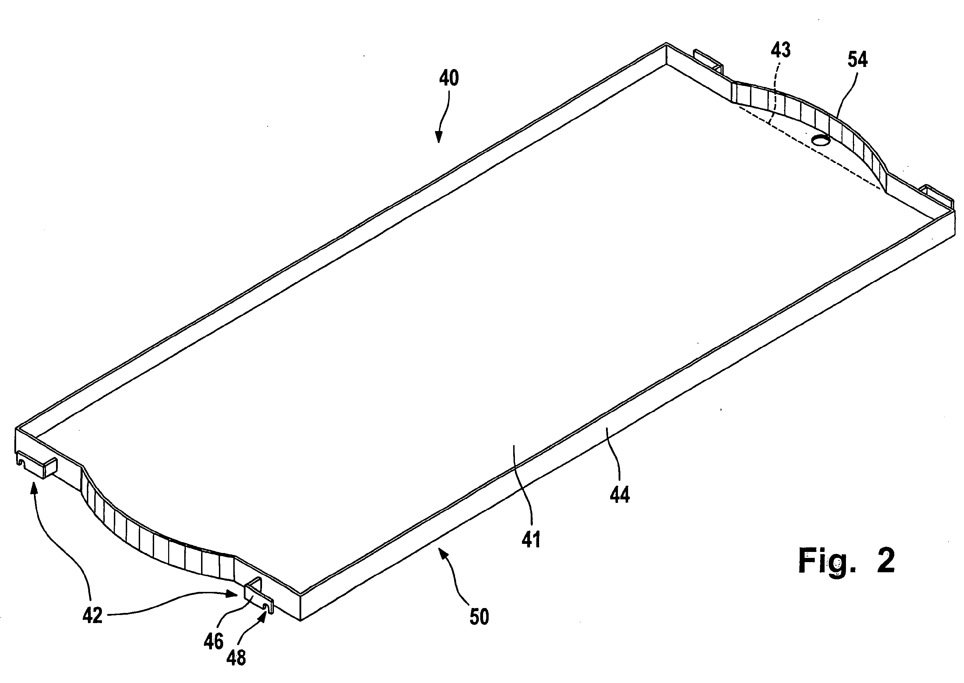

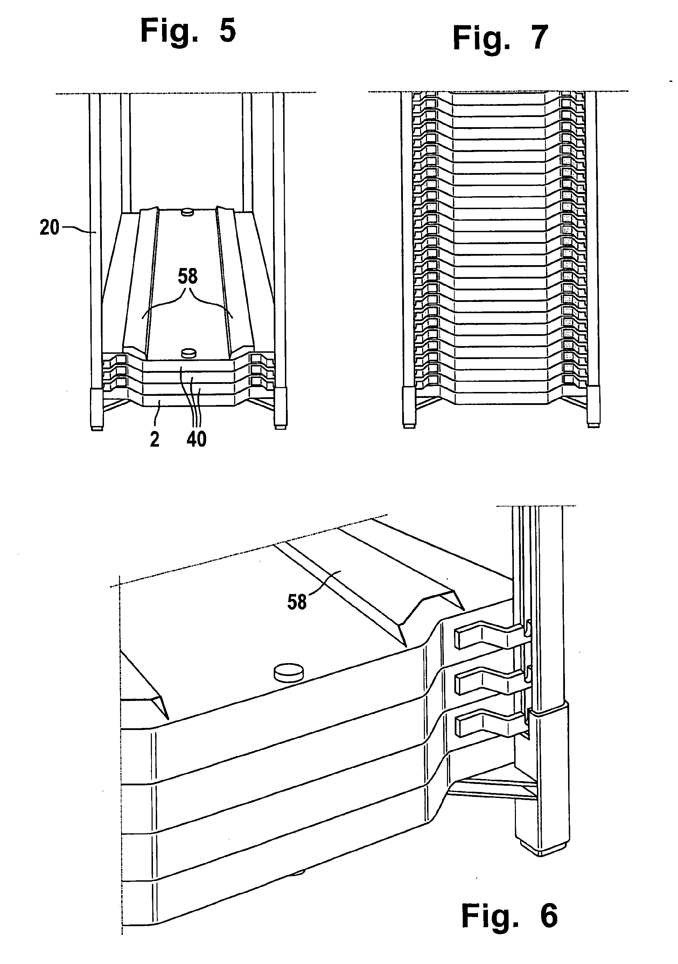

Fig. 5 bis 8 zeigen eine Anordnung, bei der eine Reihe von Lagerungsplattformen 40 übereinander in Gebrauchsstellung (zur Aufnahme von z.B. Pflanztöpfen auf ihrer Oberseite) auf die Sockelplattform 2 gestapelt sind. Die Lagerungsplattformen 40, von denen eine in Fig. 2 dargestellt ist, haben einen im ganzen rechteckigen Boden 41 und einen diesen wannenartig umschließenden Rand 44 und entsprechen in Form und Größe der Sockelplattform 2, mit dem Unterschied, daß sie zum Einhängen in die Gestellstreben 20 ausgebildet sind und keine Aufnahmehülsen und Rollen aufweisen. Innerhalb von Erweiterungen 54, die hier kreissegmentförmig dargestellt sind, ist ein oder jeweils ein Überlauf angeordnet. Jede Lagerungsplattform weist in ihren Eckbereichen jeweils ein hakenförmiges Halteelement 42 auf, das an den Rand 44 angeschweißt ist. Jedes Halteelement 42 weist einen parallel zu einer Rechteck-Schmalseite 43 der Lagerungsplattform 40 verlaufenden, frei endenden Einhänge-Endabschnitt 46 auf, der mit einem senkrecht zur Erstreckungsebene der Lagerungsplattform 40 angeordneten Einschnitt 48 versehen ist. Der Einhänge-Endabschnitt 46 weist in Richtung auf eine benachbarte Längsseite 50 der Lagerungsplattform 40, d.h. nach außen, so daß er in der in Fig. 5 bis 7 gezeigten Anordnung durch den Längsschlitz 26 in die Gestellstrebe 20 ragt.

Fig. 5 bis 8 zeigen eine Stapelung der Lagerungsplattformen 40 derart, daß jede einzelne Lagerungsplattform umgedreht (in Abdeckstellung) auf der Sockelplattform 2 bzw. einer darunter liegenden Lagerungsplattform abgelegt ist, d.h. der Boden der Lagerungsplattformen weist nach unten. Unterseitig an dem Boden 41 angebrachte, im Querschnitt U-förmige Versteifungsprofile 58 erhöhen die Tragfähigkeit des Bodens bzw. der Lagerungsplattform und dienen mit ihren stirnseitigen Endkanten gleichzeitig als Lagezentrierung für eine von oben aufgelegte, weitere Lagerungsplattform. Die Profile 58 könnten alternativ V-förmigen Querschnitt haben, um die Zentrierwirkung zu verbessern.

Wie man den Darstellungen gemäß Fig. 4 bis 6 im Zusammenhang mit Fig. 1 entnimmt, können in einem ersten Schritt die Gestellstreben 20 gegenüber dem in Fig. 4 dargestellten Zustand in einer um 180° gedrehten Stellung in die Aufnahmehülsen 16 eingesetzt werden, so daß nicht mehr die Längsschlitze 26 zueinander weisen (Transportstellung, gem. Fig. 4 bis 6), sondern die Einhängeausnehmungen 28 zueinander weisen (Fig. 1), wobei diese letztgenannte Stellung als Lagerungsstellung bezeichnet sei. In einem zweiten Schritt können dann Lagerungsplattformen 40 in einer gegenüber Fig. 5 und 6 um 180° (um eine horizontale Achse) gedrehten Stellung, deren Boden 41 dann entsprechend der Positionierung der Sockelplattform 2 nach oben weist, an beliebiger Stelle in Einhängeausnehmungen 28 eingesetzt werden, wobei die Halterungselemente 42 mit ihren Einhänge-Endabschnitten 46 durch die Einhängeausnehmungen in die Gestellstreben 20 greifen und die Einschnitte 48 der Einhänge-Endabschnitte 46 jeweils auf untere Randbereiche der Einhängeausnehmungen 28 greifen, s. Fig. 1, wo die Einhängeausnehmungen 28 lediglich durch Striche angedeutet sind.

Die Erfindung stellt somit eine Bewässerungs- und Transportvorrichtung für Pflanzen zur Verfügung, die aus einer Sockelplattform mit vier eingesteckten Gestellstreben besteht, wobei in einer Transportstellung (Fig. 4) der Gestellstreben eine Anzahl von Lagerungsplattformen auf die Sockelplattform gestapelt sein können. Hierbei führt der beschriebene Stapelvorgang zu einer wesentlichen Vereinfachung, da die leeren Lagerungsplattformen nicht etwa in die Einhängeausnehmungen 28 eingehängt werden müssen, sondern lose aufeinandergestapelt werden können, weil die Gestellstreben so positioniert sind, daß deren Längsschlitze 26 nach innen weisen und die Einhänge-Endabschnitte lose aufnehmen können. Umgekehrt können in einer Lagerungsstellung der Gestellstreben, in der die Längsschlitze nach außen und die Einhängeausnehmungen zueinander weisen, die Lagerungsplattformen jeweils in der gewünschten Höhe in die Einhängeausnehmungen eingehängt werden.

Die Transportstellung hat somit den Vorteil, daß die Lagerungsplattformen dicht an dicht gestapelt werden können, so daß bei Ausnutzung der vollen Höhe der Gestellstreben eine größere Anzahl aufgenommen werden kann, als dies bei einem Einhängen in die Einhängeausnehmungen der Fall wäre, und zudem der Einlege- bzw. Stapelvorgang wesentlich weniger Zeit erfordert als ein Einhängen.

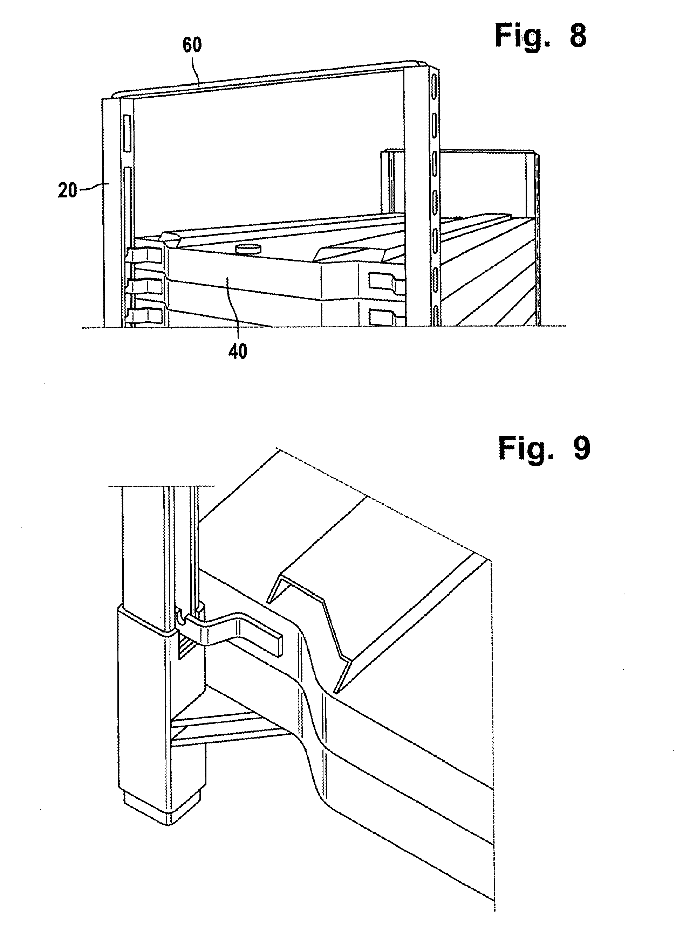

Fig. 8 zeigt eine Vorrichtung, bei der obere Enden der Gestellstreben durch einen U-förmigen Steckbügel 60 miteinander verbunden sind, wie auch in Fig. 4 angedeutet ist, wobei in Längsrichtung der Gestellstreben 20 verlaufende, parallele Schenkel des Steckbügels (nicht sichtbar) in die freien Querschnitte der Gestellstreben 20 greifen und verhindern, daß diese sich auseinanderbewegen, da in einem solchen Fall Halterungselemente von weiter oben liegenden Lagerungsplattformen nicht mehr sicher in den Längsschlitzen der Gestellstreben aufgenommen wären. Derartige Steckbügel sind selbstverständlich im Lagerungszustand nicht erforderlich, da dann die Lagerungsplattformen mit ihren Einschnitten 48 die Gestellstreben 20 in ihrem Abstand zueinander fixieren.

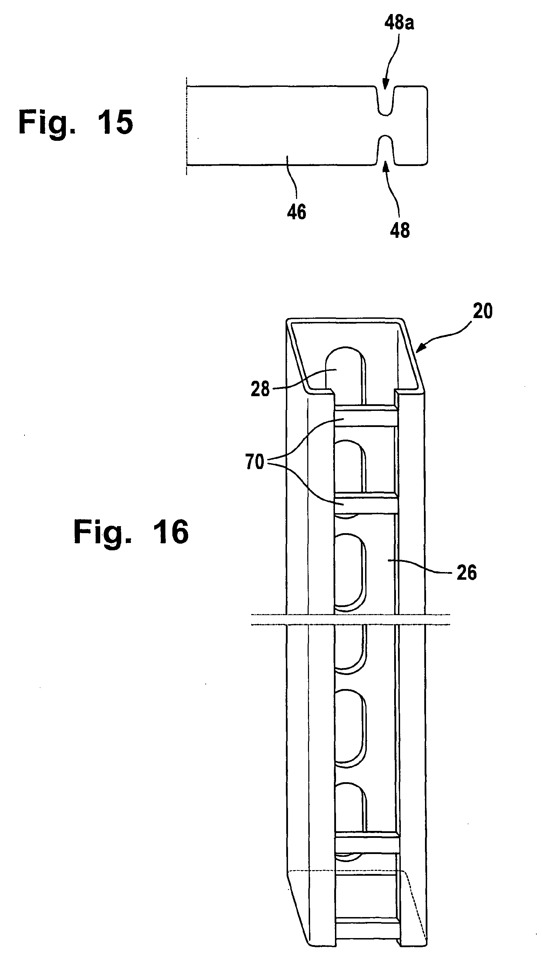

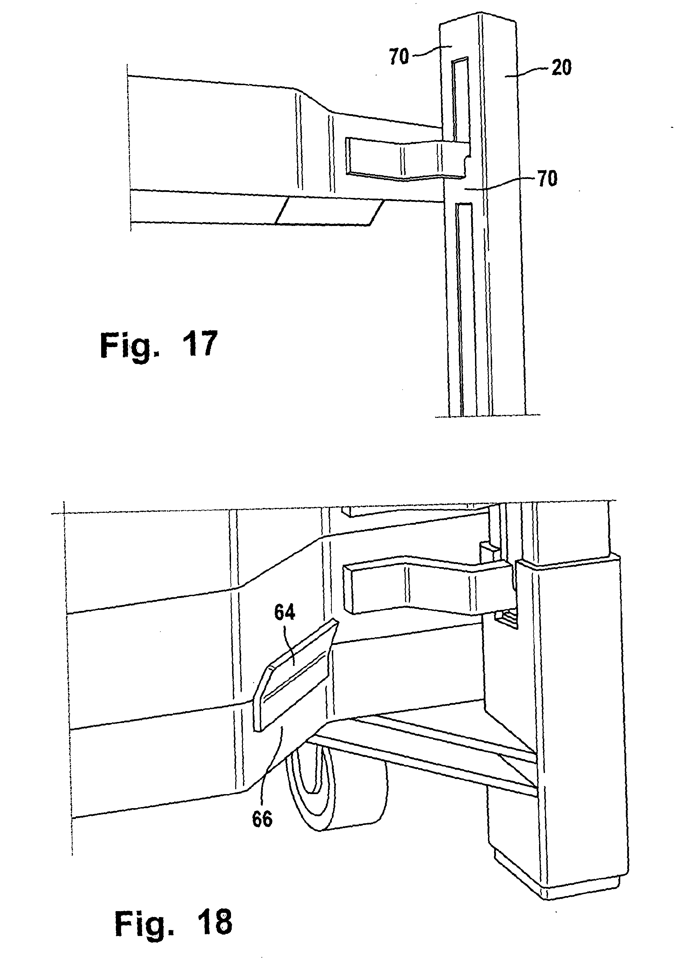

Als Alternative zur Verwendung eines Steckbügels kann vorgesehen sein, daß die Einhänge-Endabschnitte 46 der Lagerungsplattformen nicht mit einem, sondern mit zwei Einschnitten 48, 48a versehen sind, was in Fig. 15 dargestellt ist. Zusätzlich sind die Gestellstreben 20, bevorzugt (Fig. 16) an ihren Endbereichen, mit einem oder zwei beabstandeten, den Längeschlitz 26 überbrückenden Stegen 70 versehen, so daß die Möglichkeit besteht, auch in der Transportstellung der Gestellstreben, in der normalerweise keine Lagerungsplattformen eingehängt werden können, eine (insbesondere oberste) Lagerungsplattform in umgekehrter Orientierung (Abdeckstellung) auf die zueinander weisenden Stege aufzulegen, d.h. so, daß die zusätzlichen, den normalerweise verwendeten Einschnitten 48 gegenüberliegenden Einschnitte 48a in die Stege 70 eingerastet sind und auf diese Weise verhindern, daß die Gestellstreben sich oben auseinander bewegen können, und die gesamte Vorrichtung stabilisieren. Dieser Sachverhalt ist in Fig. 17 dargestellt, allerdings mit einer Lagerungsplattform, deren Einhänge-Endabschnitte nur einen Einschnitt 48 aufweisen und die sich in ihrer normalen Orientierung (Gebrauchsstellung) befindet.

Wie Fig. 9 zeigt, liegen in der Transportstellung die Halterungselemente 42 bzw. deren Einhänge-Endabschnitte 46 nicht tragend auf den Aufnahmehülsen 16 auf, sondern ragen frei in den Ausschnitt 30, wobei jeweils ein gewisser Abstand zwischen einer Unterkante eines Einhänge-Endabschnitts 46 und dem unteren Rand 32 eines Ausschnitts 30 verbleibt. Dadurch ist sichergestellt, daß die Gesamtlast der insgesamt aufgestapelten Lagerungsplattformen 40 nicht durch die Halterungselemente 42 der untersten Lagerungsplattform aufgenommen werden muß, sondern über deren gesamten Rand 44 an die Sockelplattform 2 übertragen wird. Da der Ausschnitt 30 somit lediglich die Aufgabe hat, einen gewissen Freiraum für das Halterungselement der untersten Lagerungsplattform zu schaffen, könnte alternativ vorgesehen sein, daß die Aufnahmehülsen 16 insgesamt in einer Höhe enden, die dem unteren Rand 32 des Ausschnitts entspricht. In einem solchen Fall sollte zweckmäßigerweise sichergestellt sein, daß weiterhin mehrere Sockelplattformen 2 übereinander stapelbar sind, wobei zwischen zwei Sockelplattformen Platz für die Rollen 4, soweit vorhanden, sein muß.

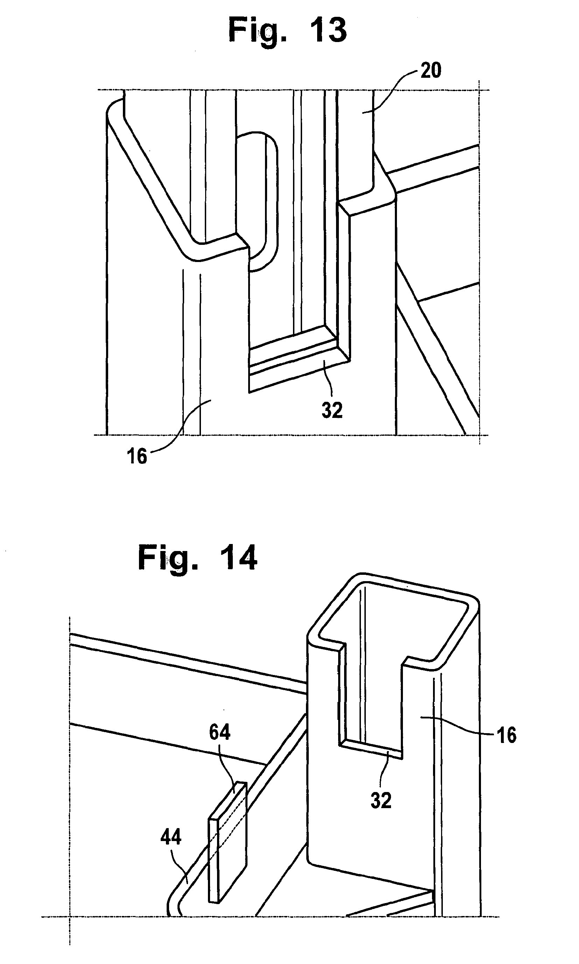

Wie bereits unter Bezugnahme auf Fig. 5 und 6 ausgeführt worden ist, weisen die Lagerungsplattformen 40 eine Zentrierung in Form der Versteifungsprofile 58 auf. Um auch eine zentrierte Position einer untersten, also unmittelbar auf der Sockelplattform 2 aufliegenden Lagerungsplattform sicherzustellen, d.h. eine Position, in der der Rand 44 der Lagerungsplattform im wesentlichen deckungsgleich auf dem Rand 10 der Sockelplattform 2 aufliegt, ohne daß eine seitliche Verschiebung auftritt, können gemäß Fig. 14 an dem Rand 10 der Sockelplattform 2 Zentrierelemente 64 befestigt sein. In dem dargestellten Fall sind an jeder Rechteckseite, d.h. an Längs- und Schmalseiten, der Sockelplattform 2 an dem Rand 10 jeweils zwei plattenförmige Zentrierelemente 64 angeschweißt, im dargestellten Fall von außen, wobei ein Teil des plattenförmigen Zentrierelements 64 nach oben über den Rand 10 vorsteht und somit eine Zentrierung für eine aufgelegte Lagerungsplattform 40 bildet. Der nach oben vorstehende Bereich des Zentrierelements 64 kann, was für eine Variante in Fig. 18 dargestellt ist, leicht nach außen umgebogen sein, um das Auflegen einer Lagerungsplattform zu erleichtern. Alternativ könnte das bzw. die Zentrierelement(e) 64 an der Innenseite des Rands 10 angebracht sein. In Abwandlung dieses Gedankens sind selbstverständlich andere Ausgestaltungen eines Zentrierelements denkbar, bspw. ein stabförmiges, senkrecht zu dem Boden 8 orientiertes Zentrierelement. Bevorzugt ist vorgesehen, lediglich vier Zentrierelemente in einer Ausführung entsprechend Fig. 12 an Bereichen 66 des Rands 10 vorzusehen, die schrägen Trapezschenkeln der Erweiterungen 14 (oder dem bogenförmigen Bereich bei einer Ausführung gemäß Fig. 3) entsprechen, um auf diese Weise mit einer geringeren Anzahl von Zentrierelementen auszukommen (Fig. 18).

Die Erfindung ist vorstehend anhand einer Sockelplattform gemäß Fig. 13 und einer damit gebildeten Bewässerungs- und Transportvorrichtung gemäß Fig. 4 bis 7 erläutert worden, wobei die im Zusammenhang damit verwendeten Lagerungsplattformen 40 mit bezogen auf die Rechteckform in Querrichtung ausgerichteten Einhänge-Endabschnitten 46 versehen sind, die je nach Stellung (Transport- oder Lagerungsstellung) der Gestellstreben 20 in deren Längsschlitze oder Einhängeausnehmungen greifen, die dann in Querrichtung, einander gegenüberstehen bzw. voneinander weg weisen.

In einer alternativen Ausführungsform könnte vorgesehen sein, daß die Lagerungsplattformen mit in Längsrichtung (bezogen auf die rechteckige Grundform, d.h. parallel zu den Längsseiten 50) endenden Einhänge-Endabschnitten versehen sind, wobei dann die Gestellstreben 20 bezogen auf die dargestellte Ausführungsform jeweils um 90° gedreht angeordnet sein müssen, damit wiederum in Transport- bzw. Lagerungsstellung die Längsschlitze bzw. Einhängeausnehmungen zueinander weisen, und zwar bezüglich der Längsrichtung der Vorrichtung. Ebenso müßten bei einer solchen Ausführungsform die Ausschnitte 30 der Aufnahmehülsen 16 so angeordnet sein, daß sie in Längsrichtung gesehen zueinander weisen, also jeweils um 90° gedreht gegenüber der dargestellten Ausführungsform damit sie ihren Zweck erfüllen können, der darin besteht, daß die Einhänge-Endabschnitte einer in Transportstellung zuunterst gestapelten Lagerungsplattform keine Last zu tragen brauchen.

### Bezugszeichenliste

- 1: Bewässerungs- und Transportvorrichtung
- 2: Sockelplattform
- 4: Rolle
- 8: Boden
- 10: Rand
- 12: Überlauf
- 14: Erweiterung
- 15: Schmalseite (von 2)
- 16: Aufnahmehülse
- 18: Versteifung
- 20: Gestellstrebe
- 22: Verschlußteil
- 23, 24: Seitenwand (von 20)
- 26: Längsschlitz
- 28: Einhängeausnehmung
- 30: Ausschnitt
- 32: unterer Rand
- 40: Lagerungsplattform
- 41: Boden
- 42: Halterungselement
- 43: Schmalseite (von 40)
- 44: Rand
- 46: Einhänge-Endabschnitt
- 48: Einschnitt
- 48a: zusätzlicher Einschnitt
- 50: Längsseite
- 54: Erweiterung
- 58: Versteifungsprofil
- 60: Steckbügel
- 64: Zentrierelement
- 66: Trapezschenkelbereich
- 70: Steg

## Patentansprüche

1. Bewässerungs- und Transportvorrichtung für Pflanzen, mit einer rechteckigen Sockelplattform (2), an deren vier Eckbereichen senkrecht dazu jeweils eine Aufnahmehülse (16) angeordnet ist, in der jeweils eine im Querschnitt C- oder U-förmige, mit einem im wesentlichen durchgehenden Längsschlitz (26) und mit einer Reihe von dem Längsschlitz (26) benachbarten und/oder gegenüberliegenden Einhängeausnehmungen (28) versehene Gestellstrebe (20) in einer vertikalen Position aufgenommen ist, **dadurch gekennzeichnet, daß** an jeder Gestellstrebe (20) mindestens ein den Längsschlitz (26) überbrückender Steg (70) angeordnet ist.

2. Vorrichtung nach Anspruch 1, **dadurch gekennzeichnet, daß** mindestens ein Steg (70) im Bereich eines Endabschnitts einer Gestellstrebe (20) angeordnet ist.

3. Vorrichtung nach Anspruch 1 oder 2, **dadurch gekennzeichnet, daß** je mindestens ein Steg (70) im Bereich jeweils eines Endabschnitts einer Gestellstrebe (20) angeordnet ist.

4. Vorrichtung nach einem der vorangehenden Ansprüche, **dadurch gekennzeichnet, daß** mindestens ein Steg (70) in einem mittleren Bereich einer Gestellstrebe (20) angeordnet ist.

5. Vorrichtung nach einem der vorangehenden Ansprüche, **dadurch gekennzeichnet, daß** die Gestellstreben (20) in einer Transportstellung angeordnet sind, in der die Längsschlitze (26) von zwei einer ersten Seite der Sockelplattform (2) zugeordneten Gestellstreben (20) zueinander und deren Einhängeausnehmungen (28) voneinander weg weisen und die Längsschlitze (26) von zwei einer der ersten Seite gegenüberliegenden zweiten Seite zugeordneten Gestellstreben (20) zueinander und deren Einhängeausnehmungen (28) voneinander weg weisen, und in einer Lagerungsstellung in den Aufnahmehülsen (16) aufnehmbar sind, in der die Einhängeausnehmungen (28) der der ersten Seite zugeordneten Gestellstreben (20) zueinander und deren Längsschlitze (26) voneinander weg weisen und die Einhängeausnehmungen (28) der der zweiten Seite zugeordneten Gestellstreben (20) zueinander und deren Längsschlitze (26) voneinander weg weisen, wobei auf der Sockelplattform (2) eine Anzahl von Lagerungsplattformen (40) übereinander gestapelt sind, von denen jede rechteckig ist und in Eckbereichen jeweils ein Halterungselement (42) aufweist, das einen frei endenden Einhänge-Endabschnitt (46) aufweist, wobei die Einhänge-Endabschnitte (46) jeweils einer Lagerungsplattform (40) in der Lagerungsstellung der Gestellstreben (20) in vier auf gleicher Höhe befindliche Einhängeausnehmungen (28) einsetzbar sind und in der Transportstellung der Gestellstreben (20) in die Längsschlitze (26) ragen, wobei eine Lagerungsplattform (40) auf vier Stege (70) der Gestellstreben (20) aufgelegt ist.

6. Vorrichtung nach einem der vorangehenden Ansprüche, **dadurch gekennzeichnet, daß** jede Aufnahmehülse (16) an ihrem unteren Ende durch ein im Querschnitt ihrem Aufnahmequerschnitt entsprechendes und über das jeweilige untere Ende vorstehendes Verschlußteil (22) abgeschlossen ist, so daß mehrere Sockelplattformen zentriert stapelbar sind.

7. Vorrichtung nach einem der vorangehenden Ansprüche, **dadurch gekennzeichnet, daß** die Gestellstreben (20) im Querschnitt im wesentlichen quadratisch ausgebildet sind.

8. Vorrichtung nach einem der vorangehenden Ansprüche, **dadurch gekennzeichnet, daß** die Sockelplattform (2) unterseitig mit Rollen (4) versehen ist.

9. Vorrichtung nach einem der vorangehenden Ansprüche, **dadurch gekennzeichnet, daß** die Einhängeausnehmungen (28) der Gestellstreben (20) abwechselnd eine erste und eine zweite Form aufweisen.

10. Vorrichtung nach einem der vorangehenden Ansprüche, **dadurch gekennzeichnet, daß** die Sockelplattform (2) einen Boden (8) und einen wannenartig umlaufenden Rand (10) aufweist.

11. Vorrichtung nach einem der vorangehenden Ansprüche, soweit auf Anspruch 2 rückbezogen, **dadurch gekennzeichnet, daß** die mindestens eine Lagerungsplattform (40) einen Boden (41) und einen umlaufenden Rand (44) aufweist, wobei ihr Grundriß im wesentlichen mit dem der Sockelplattform (2) übereinstimmt.

12. Vorrichtung nach einem der vorangehenden Ansprüche, **dadurch gekennzeichnet, daß** die Sockelplattform (2) mit Zentrierungen (64) für eine darauf zu stapelnde Lagerungsplattform (40) versehen ist.

13. Vorrichtung nach einem der vorangehenden Ansprüche, soweit rückbezogen auf Anspruch 2, **dadurch gekennzeichnet, daß** die mindestens eine Lagerungsplattform (40) in Transportstellung mit ihrer Oberseite nach unten weisend auf die Sockelplattform (2) aufgestapelt ist.

14. Vorrichtung nach Anspruch 13, **dadurch gekennzeichnet, daß** die mindestens eine Lagerungsplattform (40) unterseitig mit einer Zentrierung (58) für eine in Transportstellung darüber gestapelte Lagerungsplattform (40) versehen ist.

15. Vorrichtung nach einem der vorangehenden Ansprüche, **dadurch gekennzeichnet, daß** die Lagerungsplattformen (40) an ihren Einhänge-Endabschnitten (46) mit zwei gegenüberliegenden Ausformungen (48, 48a) versehen sind, mit denen sie, wahlweise in einer Gebrauchsstellung oder in einer umgedrehten Abdeckstellung, auf Stege (70) aufleg- und einhängbar sind, die den jeweiligen Längsschlitz der Gestellstreben stellenweise überbrücken.

16. Gestellstrebe (20) für eine Bewässerungs- und Transportvorrichtung für Pflanzen, insbesondere nach Anspruch 1, die in eine Aufnahmehülse (16) einer Sockelplattform (2) der Vorrichtung einsetzbar ist, mit C- oder U-förmigem Querschnitt, einem im wesentlichen durchgehenden Längsschlitz (26) und mit einer Reihe von dem Längsschlitz (26) benachbarten und/oder gegenüberliegenden Einhängeausnehmungen (28), **dadurch gekennzeichnet, daß** an jeder Gestellstrebe (20) mindestens ein den Längsschlitz (26) überbrückender Steg (70) angeordnet ist.

17. Gestellstrebe nach Anspruch 16, **dadurch gekennzeichnet, daß** mindestens ein Steg (70) im Bereich eines Endabschnitts einer Gestellstrebe (20) angeordnet ist.

18. Gestellstrebe nach Anspruch 16 oder 17, **dadurch gekennzeichnet, daß** je mindestens ein Steg (70) im Bereich jeweils eines Endabschnitts einer Gestellstrebe (20) angeordnet ist.

19. Gestellstrebe nach einem der Ansprüche 16 bis 18, **dadurch gekennzeichnet, daß** mindestens ein Steg (70) in einem mittleren Bereich einer Gestellstrebe (20) angeordnet ist.

20. Verfahren zum zeit- und platzsparenden Anordnen einer Bewässerungs- und Transportvorrichtung für Pflanzen in einer Transport- oder Lagerungsstellung, wobei die Vorrichtung aufweist:
eine rechteckige Sockelplattform (2), an deren vier Eckbereichen senkrecht dazu jeweils eine Aufnahmehülse (16) angeordnet ist, in der jeweils eine mit einem im wesentlichen durchgehenden Längsschlitz (26) und einer Reihe von dem Längsschlitz benachbarten und/oder gegenüberliegenden Einhängeausnehmungen (28) versehene Gestellstrebe (20) in einer vertikalen Position aufgenommen ist, wobei an jeder Gestellstrebe (20) mindestens ein den Längsschlitz (26) überbrückender Steg (70) angeordnet ist, wobei die Gestellstreben (20) wahlweise in einer Transportstellung, in der die Längsschlitze von zwei einer ersten Seite der Sockelplattform (2) zugeordneten Gestellstreben (20) zueinander und deren Einhängeausnehmungen voneinander weg weisen und die Längsschlitze (26) von zwei einer der ersten Seite gegenüberliegenden zweiten Seite zugeordneten Gestellstreben (20) zueinander und deren Einhängeausnehmungen voneinander weg weisen, oder in einer Lagerungsstellung, in der die Einhängeausnehmungen (28) der der ersten Seite der Sockelplattform (2) zugeordneten Gestellstreben (20) zueinander und deren Längsschlitze voneinander weg weisen und die Einhängeausnehmungen (28) der der zweiten Seite zugeordneten Gestellstreben (20) zueinander und deren Längsschlitze voneinander weg weisen, aufnehmbar sind, wobei rechteckige Lagerungsplattformen (40), die in vier Eckbereichen jeweils ein Halterungselement (42) aufweisen, von denen jedes einen frei endenden Einhänge-Endabschnitt (46) aufweist, mit den Einhänge-Endabschnitten in der Lagerungsstellung der Gestellstreben (20) in auf gleicher Höhe befindliche Einhängeausnehmungen (28) einsetzbar oder in der Transportstellung der Gestellstreben (20) in den Längsschlitzen (26) aufnehmbar sind,
mit den Schritten: Bereitstellen einer Bewässerungs- und Transportvorrichtung in Lagerungsstellung, Herausnehmen der Lagerungsplattform(en) (40) aus der Vorrichtung, Umsetzen der Gestellstreben (20) in die Transportstellung, und Aufstapeln einer Anzahl von Lagerungsplattformen (40) übereinander auf der Sockelplattform (2), wobei die Einhänge-Endabschnitte (46) der Lagerungsplattformen in die Längsschlitze (26) der Gestellstreben ragen,
**dadurch gekennzeichnet, daß** nach dem Herstellen der Transportstellung mindestens eine Lagerungsplattform (40) auf Stege (70) aufgesetzt wird,
oder in umgekehrter Reihenfolge: Abstapeln der Lagerungsplattformen, Umsetzen der Gestellstreben in die Lagerungsstellung und Einhängen von Lagerungsplattformen in die Gestellstreben.

21. Verfahren nach Anspruch 20, **dadurch gekennzeichnet, daß** eine Lagerungsplattform in oberster Position auf Stege (70) aufgesetzt wird.

22. Verfahren nach Anspruch 21, **dadurch gekennzeichnet, daß** die oberste Lagerungsplattform in umgekehrter Lage (Abdeckstellung) aufgesetzt wird.
